# EUROPEAN PATENT SPECIFICATION

(11) **EP 3 465 559 B1**
(45) Date of publication and mention of the grant of the patent: **11.12.2019**
(21) Application number: 16738072.4
(22) Date of filing: 27.05.2016
(51) Int. Cl.: G06Q 10/00, B65F 1/14, B65F 3/00, G06Q 10/06, G06Q 10/08, G06K 7/10, G06Q 50/28

(54) **A COMMUNICATION DEVICE FOR MANAGING REFUSE COLLECTION PERFORMED ACCORDING TO PRE-ESTABLISHED SCHEDULE, A PROCESS FOR MANAGING REFUSE COLLECTION AND A SYSTEM FOR MANAGING REFUSE COLLECTION**
EINE KOMMUNIKATIONSEINRICHTUNG, EIN VERFAHREN UND EIN SYSTEM FÜR DIE VERWALTUNG VON MÜLLABFUHR GEMÄSS EINEM IN VORAUS FESTGELEGTEN ZEITPLAN
UN DISPOSITIF DE COMMUNICATION, PROCÉDÉ ET SYSTÈME DE GESTION D'ÉLIMINATION DES DÉCHETS DEFINIES EN AVANCE EN FIXE HORAIRES

(43) Date of publication of application: 10.04.2019
(73) Proprietor: Eco Mobile d.o.o., 10000 Zagreb (HR)
(72) Inventor: IVANOVIC Aleksandar, HR-10000 Zagreb (HR)
(74) Representative: Sucic, Tatjana
(86) International application number: PCT/EP2016/025051
(87) International publication number: WO 2017/202438

(56) References cited:
- WO-A1-01/55994
- US-A1- 2010 088 203
- US-A1- 2014 214 697
- US-A1- 2015 307 273

## Description

### FIELD OF THE INVENTION

This invention generally relates to managing and improving city services, and more particularly to managing and allocating resources using a communication devices and network to more efficiently utilize the resources and promote efficiency of the refuse collection. Present invention relates to a communication devices provided with visual signalization for managing refuse collection according to a pre-established schedule, a process for managing refuse collection and to a system for managing refuse collection.

### BACKGROUND OF THE INVENTION

A common practice for emptying the containers of their contents is to employ a service vehicle which includes a hopper for receiving the contents of the containers, and a lifting mechanism for engaging each of the several containers and for lifting the engaged container to the hopper. In the course of lifting the container to the hopper, steps are taken to invert the container so that its contents fall into the hopper under the influence of gravity. This is often facilitated by providing the lifting mechanism and the container with cooperating structures which enable the operator to perform the desired operations remotely, from the service vehicle.

To improve overall efficiency, U.S. patent application Ser. No. 09/965,964, filed Sep. 28, 2001, and entitled "System for Auditing Refuse Collection" describes a system for auditing the refuse collection process. To this end, customers are charged for service according to the number of times their refuse containers are accessed. The customers subscribing to the service are in this way motivated to call for collections of their refuse only from containers that are substantially full, or the refuse collection service is compensated for additional container pickups.

Such collections can be called for using a device such as is described in U.S. Pat. No. 6,295,946, issued Oct. 2, 2001, and entitled "Signalling Device for Use with a Container". The disclosed signalling device preferably takes the form of a flag, one end of which is coupled with a hinge associated with the refuse container. The hinged connection allows the flag to move between a lowered position in which the flag lies over the cover of the container, and a raised position in which the flag extends upwardly from the container, developing a change in state which is indicative of access to the container. The signalling device is automatically returned to the lowered position when the container is emptied.

The above-described systems work well to provide an efficient refuse collection operation, or to implement other operations that can benefit from such improvements. However, in accordance with the present invention, an alternative system has been developed which can still further enhance the efficiency of the overall operations being performed.

The present invention relates primarily to the field of refuse collection, and more particularly, to a system which can operate to manage the number of times their refuse containers are accessed and emptied, and to communicate to a central facility as refuse container is emptied by a refuse collection service. Although the following discussion is given in the context of refuse collection, it will be appreciated that the following improvements can benefit other industries which use containers for any of a variety of diverse purposes.

WO 01/55994 A1 discloses a system of communication devices for collecting refuse that employs a mobile master device and a plurality of transponders attached to the refuse containers.

US 2010/088203 A1 describes RFID tags and optical detectors.

US 2015/307273 A1 discloses refuse containers having communication devices with Bluetooth, NFC, and accelerometers for indicating emptying of the refuse container.

US 2014/214697 A1 describes a refuse collection system having RFID tags for identifying the type of refuse in the container.

### SUMMARY OF THE INVENTION

It is an object of the invention to provide a plurality of communication devices, a method and system for managing refuse collection as set out in the attached claims. In conjunction with the collection of refuse, common practice is to station containers at each of a plurality of sites so that customers of the collection service can deposit refuse in their respective containers for subsequent collection, usually according to a pre-established schedule. The collection service then takes appropriate steps, according to the pre-established schedule, to empty the containers of its customers and to remove the contents for disposal. Some collection services charge a flat fee for the services provided, while others charge according to the number of containers that are emptied.

The general purpose of the present invention, which will be described subsequently in greater detail, is to provide a communicating devices and a system for managing refuse collection according to the pre-established schedule to empty the containers of its customers, wherein schedule is based on the number of emptying of the particular container according to the customer's demand. This tended to limit the overall efficiency of the operation, in turn contributing to unnecessary costs.

A further object of the present invention is to provide a process for managing refuse collection according to pre-established schedule. The process includes downloading and displaying the download list on the master device, wherein the download list contains list of media access control addresses (MAC addresses) of the plurality of slave devices at selected locations, which slave devices are affixed to the refuse containers scheduled for emptying, where said refuse containers and respectively slave devices are located in the communication range of the master device.

The process includes the prior step of entering the data in the master database at a facility centre, wherein the data comprise pre-established schedule of emptying for each of the refuse containers of its customers and communicating the retrieved data in the form of the signal from the master device to the plurality of slave devices on selected location, wherein each of the slave devices according to the received signal emits intermitting light of particular colour defining if particular refuse container is scheduled for emptying or not.

Still an additional object of the present invention is to provide a system for managing refuse collection according to the pre-established schedule.

### BRIEF DESCRIPTION OF THE DRAWINGS

For further detail regarding preferred implementations of the present invention, reference is made to the detailed description which is provided below, taken in conjunction with the following illustrations:
FIG. 1 is a schematic view of a system which has been provided with pre-established schedule for emptying containers of its customers in accordance with the present invention;
FIG. 2 is a view illustrating a master device in accordance with the present invention;
FIG. 3 is a view illustrating a slave device in accordance with the present invention;
FIG. 4 is a view illustrating a slave device attached to the refuse container in accordance with the present invention;
FIG. 5 is a block diagram illustrating configuration of a master device in accordance with the present invention;
FIG. 6 is a block diagram illustrating configuration of a slave device in accordance with the present invention;
FIG. 7 is a flow diagram illustrating process of operation of a master device in accordance with the present invention; and
FIG. 8 is a flow diagram illustrating process of operation of a slave device in accordance with the present invention.

A system for managing refuse collection performed by a refuse collection service for emptying a refuse containers 120 according to pre-established schedule, the system consisting of:
a communication network provided for the refuse collection service, the refuse collection service managing a master database which can be accessed via a modem on the Internet, wherein the master database includes customers data and the schedule of emptying customers containers,
a communication devices consisting of a plurality of slave devices 110 where particular slave device 110 is affixed to the particular refuse container 120, and a master device 100, wearable by person performing a refuse collection or coupled to the service vehicle, the master device 100 capable receiving a download list over Internet connection and displaying the same, wherein the master device 100 is establishing Bluetooth connection with the plurality of slave devices 110 located in the communication range of the master device 100,
wherein the download list comprises list of MAC addresses of the plurality of slave devices 110 located in the communication range of the master device 100.

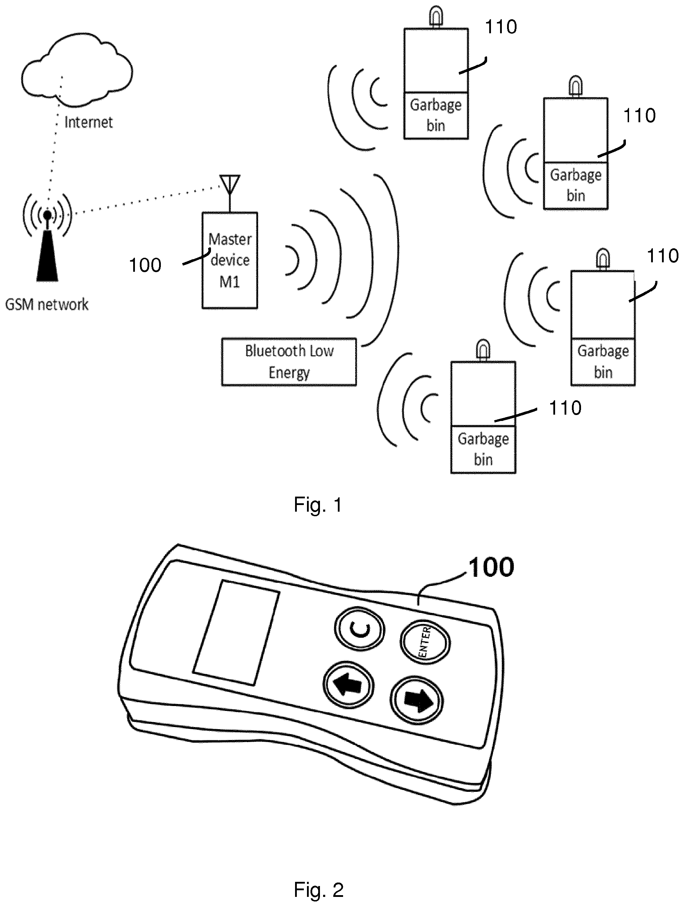

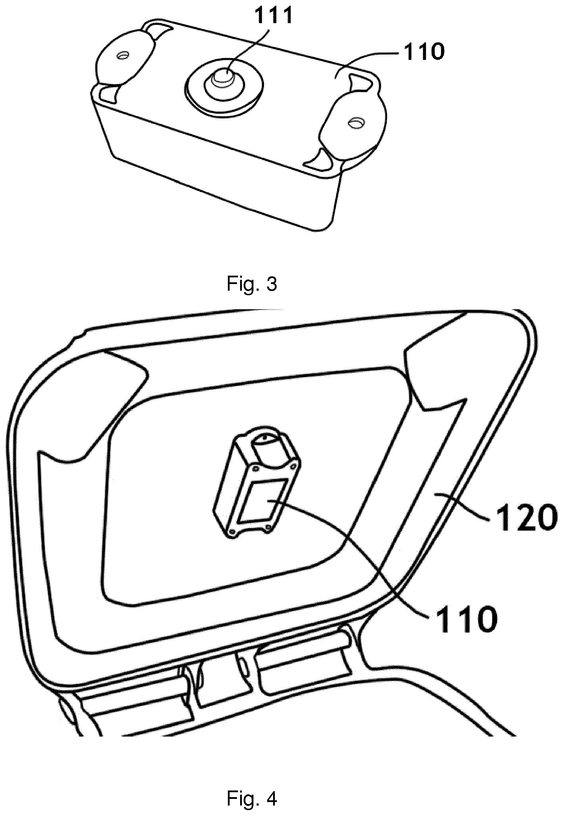

The system is typically used to manage the emptying of a plurality of refuse containers 120, particularly to the containers which located in particular area, wherein operation of emptying is performed according to pre-established schedule. Referring to the drawings, in accordance with the invention, the system includes a communication devices comprising a plurality of slave devices 110 which are provided at refuse containers, the refuse containers 120 are emptied according to the pre-established schedule (see Figures 3 and 4), and a master device 100, (see Figure 2) wearable by person performing a refuse collection or the master device 100 is coupled to the service vehicle, a communication network and a facility centre which includes a master database (MDB). As described in more detail below, the system manages refuse collection, and its progress according to pre-established schedule of emptying plurality of refuse containers 120. The system includes a facility centre with its master database which can be accessed via a modem on the Internet. Each master device 100 of the system also includes means for connecting to the Internet. The master device 100 further includes a communication means, such as Bluetooth low energy module, for communicating with the plurality of slave devices 110 at selected locations, where each slave device is affixed to different refuse container 120, and further to each of the slave devices 110 is assigned MAC address.

FIG. 4 shows the refuse container 120 to which has been affixed the slave device 110 produced in accordance with the present invention. It will be understood that the container 120 shown in FIG. 4 is a schematic representation of any of a variety of different types of containers that can be used for containing refuse which is to be collected by a servicing agency. It is also to be understood that a refuse container has been selected only for purposes of illustration, and that the improvements of the present invention can similarly be used with any of a variety of different types of containers, which can be used for purposes other than refuse collection. Although the description which follows discusses the application of the improvements of the present invention to refuse containers, and refuse collection operations, it is further to be understood that the improvements of the present invention can be used with other types of systems for containing articles, and for servicing such containers or their contents.

The slave unit 110 typically includes a unique identifier, e.g. a unique identification code, uniquely to identify the refuse container 120 within which it is mounted. The unique identification code is presented in the master database as MAC address.

The communication network may include GPS (Global Positioning System) and/or a communication network e.g. GMS (Global System for Mobile Communications).

The system may include an identification interface for identifying an operator or user involved in the system. A schedule for emptying of the plurality of containers 120 may be downloaded from the master database and fed into the remote master device 100. Typically, the master database includes customer data and the schedule of emptying customer's container. The master database is maintained at central facility operated by city service responsible for refuse collection and management. The stored data can then be used to establish routing, and dispatch the appropriate personnel and equipment.

The master database comprises data relating to each container and pre-established schedule of each container emptying, the schedule is defined according to the customer's demand. The schedule for emptying of the plurality of containers 120 at selected location is in the form of a download list which is displayed on a LCD screen of the master device 100. When the download list is communicated between the master device 100 and the master database, the master device 100 is ready for operation and activates the plurality of slave devices 110 located in the communication range of the master device 100, so that each slave device 110 receives command to start emitting an intermitting light.

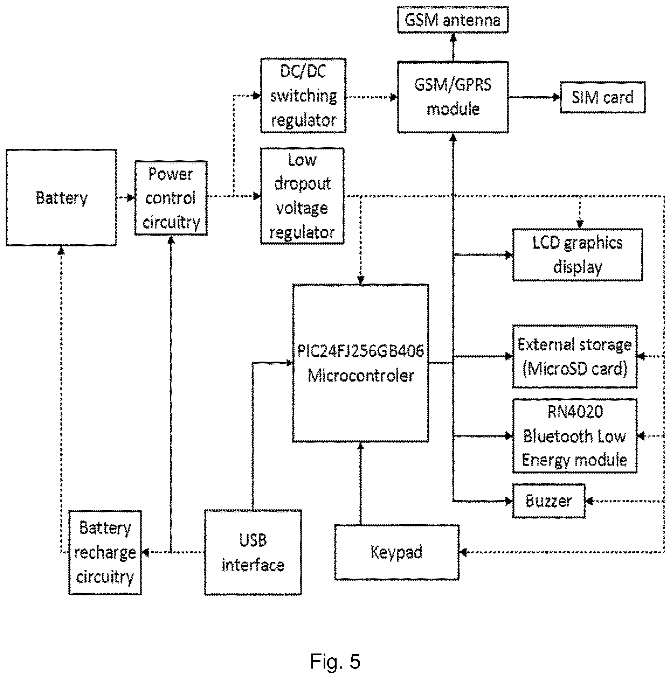

The plurality of slave devices are provided with visual signalization for improved and easier managing refuse collection, wherein communication devices comprise master device 100, wearable by person performing a refuse collection or the master device 100 is coupled to the service vehicle, and a plurality of slave devices 110, wherein each slave device 110 is attached to the particular refuse container 120. The master device 100 is hooked to the belt of an employee, or in some other way, while an employee is performing emptying of the plurality of refuse containers 120. The master device 100 (see Figures 2 and 5) is provided with a GSM/GPRS module, a SIM card, a GSM antenna, a LCD graphic display, a keypad, a microcontroller, a Bluetooth low energy module and a battery with a recharge and a power control circuitry. Further, the master device 100 is provided with an external storage card, a buzzer, voltage regulator and a DC/DC switching regulator. The master device 100 is operated via the keypad and has a built-in LCD graphic display to select a function and display downloaded list. The first step is to choose the menu via the keypad to download the list of the containers 120 scheduled to be emptied. For downloading the list is not required any special application since the download list is retrieved via the Internet in JSON format (JavaScript Object Notation). The download list of the containers 120 scheduled for emptying can be exported by any data processing programs such as Excel, SQL, MySQL, PostgreSQL or the like. The master device 100 will download the data list using TCIP protocol via the Internet from the default IP address and port. The download list consists of a list of media access control addresses (MAC addresses) of the slave devices 110 located in particular area within the range of the master device 100 Bluetooth low energy module, wherein the download list includes only the MAC addresses of the slave devices 110 affixed to the refuse containers 120 that are scheduled for emptying. After downloading the list, the master device 100 will display the information that the data list is successfully downloaded, which means that the master device 100 is ready for operation. The master device 100, when said device is switched on, has a constantly running Bluetooth module and activates each of the plurality of slave devices 110 that are located in the communication range of the master device 100. After the master device 100 has successfully downloaded list, its GSM device is disabled and Bluetooth module of the master device 100 is enabled in order to scan Bluetooth modules of the plurality of slave devices 110 that are situated at selected location. Afterwards the master device 100 connects to the plurality of slave devices 110 and determines if each of the MAC addresses of the slave devices 110 is present on the download list or not. For the MAC addresses assigned to the slave devices 110 is present on the download list, the master device 100 sends to those slave devices 110 command to emit intermitting green light. Green light provides a visual indication to the operator that refuse container 120 with affixed slave device 110 emitting green light is scheduled for emptying. When the operator performs emptying of the particular refuse container 120 with affixed the slave device 110 emitting green light, the MAC address of the said slave device 110 will be removed from the download list. Each of the slave devices 110 is provided with the 3-axis linear accelerometer indicating change in their position. Depending on the type of the refuse container 120 and manner of its emptying, the slave device 110 needs to be affixed to the refuse container 120 on such a position that after emptying the refuse container, the 3-axis linear accelerometer indicates container's emptying and sends information to the master device 100, thereafter the MAC address of the emptied refuse container 120 is removed from the list. Further, for the MAC addresses assigned to the slave devices 110 not present on the download list, meaning that said slave devices 110 i.e. the slave devices 110 affixed to the refuse containers 120 that are not scheduled for emptying, the master device 100 sends to those slave devices 110 command to emit intermitting red light. Red light provides a visual indication to the operator that refuse container 120 with affixed slave device 110 emitting red light is not scheduled for emptying. When finally operator performs emptying of all the refuse containers 120 from the download list, the Bluetooth module of the master device 100 is disabled, and the operator can proceed to a subsequent location.

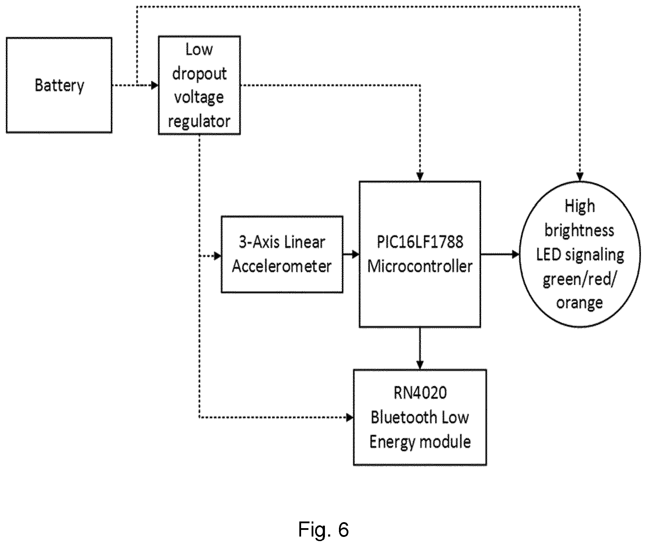

Each of the slave devices 110 (see Figures 3, 4 and 6) is provided with a high brightness signalling LED light, a 3-axis linear accelerometer, a microcontroller, a Bluetooth low energy module and independent power supply, wherein each slave device 110 has unique MAC address assigned to particular refuse container 120, the container 120 assigned to particular customer, or the group of customers. Data relating the refuse containers 120 and its customers are saved and frequently updated in the master database maintained by customer facility. The refuse container 120 may include the slave device 110, or the slave device 110 may be mounted at the time of the manufacture of the refuse container 120. Instead it may be retrofitted to an existing refuse container 120. The slave device 110 is attached to the outside visible part of the container 120, or at the underside of the lid of the container 120.The slave device includes a power source, the power source may be in the form of a rechargeable battery. In this regard, the battery may be rechargeable from an electrical mains supply. Instead, the battery may be rechargeable via a battery charger arrangement. The battery charger arrangement may include a solar panel. The slave device 110 is dismountably mounted in the refuse container 120 permitting its removal and mounting in a different refuse container 120. The slave device 110 includes a unique identifier in the form of the MAC address, uniquely to identify the refuse container 120 within which it is mounted. Communication between each slave device 110 and remote master device 100 is typically done in a wireless fashion, such as Bluetooth low energy wireless technology. After the master device 100 activates the plurality of slave devices 110, the high brightness signalling LED light 111 starts emitting intermitting light. When an employee wearing the master device 100 approaches in the vicinity of the refuse containers 120, where each of the containers 120 has affixed the slave device 110, the master device 100 will send to each of the slave devices 110 a command to activate the LED light 111. LED light 111 is designed to emit intermitted light signal (e.g. duration of the blink may be 0.5 seconds and the duration of how long it repeats the blinks e.g. 60 seconds). Depending on the fact whether the MAC address of the particular slave device 110 is on the download list, or respectively is not present on the download list, the command sent by the master device 100 to each slave device 110 contains information on the colour to be emitted by the LED light 111. If the refuse container 120 is scheduled for emptying, the attached slave device 110 emits intermitting green light. If the refuse container 120 is not scheduled for emptying, the attached slave device 110 emits intermitting red light. Convention in relation to said colours can define other colours as long as differentiating colours in respect of visual signalling are provided, thus signalling which of the refuse containers 120 are scheduled for emptying and which of refuse containers 120 are not scheduled for emptying. Upon successfully downloading the download list and the master device 100 is operating, the plurality of slave devices 110 in the communication range of the master device 100 start emitting intermitting light of the particular colour visually indicating whether particular refuse container is scheduled for emptying or not. This way the efficiency of the overall refuse collection is being performed, and service based on charging for service according to the number of times customer's refuse containers are emptied is enhanced. Further, each of the slave devices 110 is provided with the 3-axis linear accelerometer indicating change in their position. Depending on the type of the refuse container 120 and the manner of its emptying, the slave device 110 needs to be affixed to the refuse container 120 on such a position that after emptying the refuse container, the 3-axis linear accelerometer indicates container's emptying and sends information to the master device 100, thereafter the MAC address of the emptied refuse container 120 is removed from the download list.

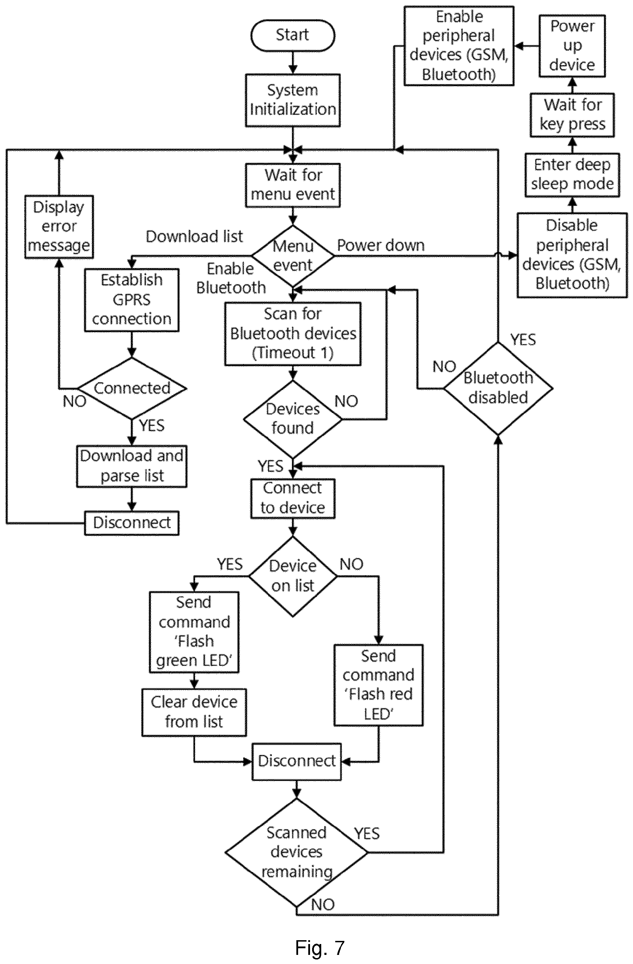

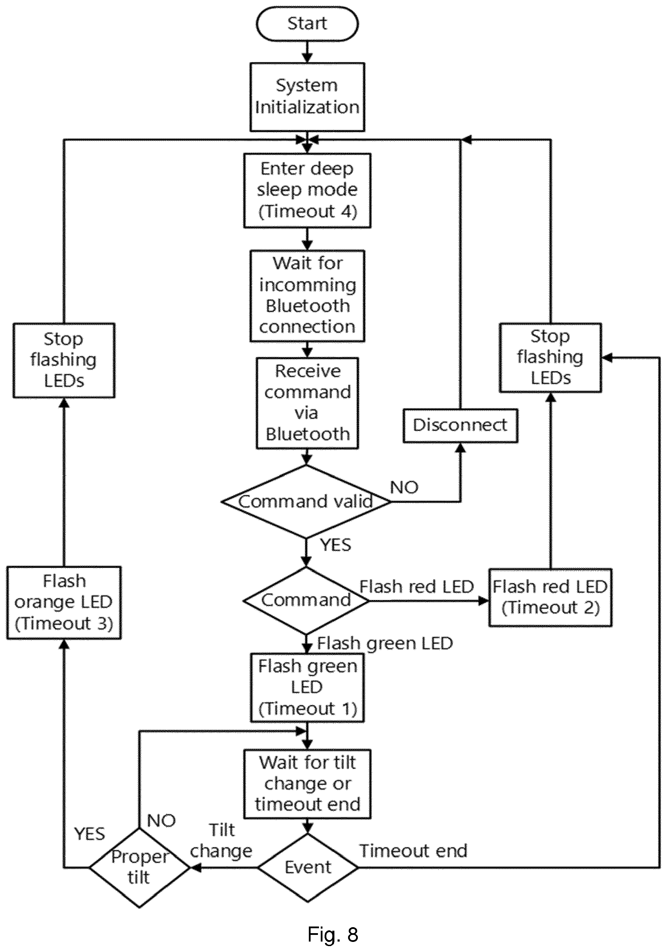

Figures 7 and 8 illustrate flow diagram illustrating process of operation of the master device 100 and the slave device 110 in a process for managing refuse collection.

A process for managing refuse collection performed by a refuse collection service from a refuse containers 120 according to pre-established schedule, wherein each of the refuse containers 120 include affixed a communication slave device 110, and each of the plurality of slave devices 110 at selected location is communicating with a master device 100, wherein the process comprises the steps of:
switching on the master device 100 and enabling its GSM device and Bluetooth low energy module, and thereafter connecting the master device 100 via Internet with a refuse collection service maintaining a master database;
initialization of the master device 100 and waiting for menu event and establishing a GPRS connection;
downloading and displaying a download list on the master device 100 LCD display, wherein the download list contains the list of MAC addresses of the plurality of slave devices 110 affixed to the refuse containers 120, the refuse containers 120 are scheduled for emptying, where said refuse containers 120 with affixed slave devices 110 are located in the communication range of the master device 100;
scanning for Bluetooth modules of the plurality of slave devices 110 affixed to the containers 120;
determining if the slave devices 110 are found; and
establishing a connection between the master device 100 and the each found of the plurality of the slave devices 110.

Thereafter establishing the connection, the master device 100 compares MAC addresses from the download list with the MAC addresses of the connected slave devices 110 and determines which MAC addresses of the slave devices 110 is present on the downloaded list.

If MAC address of the particular slave device 110 is present on the download list, the master device 100 sends command to the slave device 110 to emit intermitting green LED light, the green LED light is signalling that refuse container needs to be emptied.

After the refuse container 120 is being moved in a manner that it is emptied, a 3-axis linear accelerometer provided in the slave device 110 indicates that refuse container 120 is emptied, and thereafter sends the information of to the master device 100, wherein the MAC address of the said emptied refuse container 120 is removed from the download list.

If the MAC address of the particular slave device 110 is not on the download list, the master device 100 sends command to the slave device 110 to emit intermitting red LED light, the red LED light signalling that container 120 is not scheduled for emptying.

Time of intermitting LED light of the slave device 110 is preferably in the range from 60 to 120 seconds, but another time interval can be set.

The master device 100 sends the commands to the plurality of slave devices 110 until all MAC addresses of the slave devices 110 present on the download list are removed from said download list, and thereafter the intermitting lights are disconnected.

After downloading and displaying the download list of MAC addresses of the refuse containers 120 scheduled for emptying GSM device and Bluetooth low energy module of the master device 100 are disabled.

As previously indicated, the communicating devices of the present invention can be used with any of a variety of different types of containers (including refuse containers and containers for use in applications other than the handling of refuse).

The customer data in the master database can be processed to produce customer billing which reflects a given subscriber's use of the refuse collection service (e.g., according to the number of times the subscriber's container has been emptied, the weight of the contents removed, or a combination of these parameters). The subscriber's billing can in this way reflect the actual cost of the services performed.

It will be understood that various changes in the details, materials and arrangement of parts which have been herein described and illustrated in order to explain the nature of this invention may be made by those skilled in the art within the scope of the invention as expressed in the following claims.

## Claims

1. A plurality of communication devices for managing refuse collection performed by a refuse collection service from refuse containers (120) according to a pre-established schedule for emptying each refuse container (120), the communication devices consisting of:
a master device (100) capable of receiving a download list from a server maintained by the refuse collection service and displaying the same;
a plurality of slave devices (110), each slave device (110) being attached to a respective refuse container (120), wherein the master device (100) has a wireless communications module for activating each of the plurality of slave devices (110) that are located within the communication range of the master device (100); **characterised in that**
each of the slave devices (110) is provided with a high brightness signalling LED light (111), a 3-axis linear accelerometer for indicating the refuse container (120) emptying, a microcontroller, a wireless communications module and an independent power supply, wherein each of the slave devices (110) has unique MAC address assigned to its respective refuse container (120);
wherein the download list includes only the MAC addresses of the slave devices (110) attached to refuse containers (120) that are scheduled for emptying, where when said slave devices (110) are located within the communication range of the master device (100),
the master device (100) activates emitting intermitting light from the LED light (111) of each slave device (110), the light being of a particular colour, wherein the colour visually indicates if the respective refuse container (120) is scheduled for emptying or not.

2. The devices according to claim 1, wherein the master device (100) is provided with a GSM/GPRS module, a GSM antenna, an LCD graphic display, a keypad, a microcontroller, the wireless communications module and a battery with a recharge and a power control circuitry.

3. The devices according to claim 1, wherein the download list is downloaded from a server maintained by the refuse collection service via the Internet by using TCIP protocol.

4. The devices according to claim 3, wherein the server contains a master database containing a data relating to each MAC address of the slave devices (110) affixed to the refuse containers (120) and the pre-established schedule for emptying of each refuse container (120).

5. The devices according to claim 1, wherein independent power supply of each slave device (110) is a rechargeable battery from an electrical means supply or a battery charger arrangement including a solar panel.

6. The devices according to claim 1, wherein each slave device (110) is affixed to the outside visible part of its respective refuse container (120), or at the underside of the lid of said refuse container (120).

7. The devices according to claim 1, wherein the refuse containers (120) are any type, including containers for use in applications other than the handling of refuse.

8. The devices according to claim 1, wherein the wireless communication module of the master device (100) and the slave devices (110) is a Bluetooth low energy module.

9. A process for managing refuse collection performed by a refuse collection service from refuse containers (120) according to a pre-established schedule using the plurality of communication devices of claim 1, wherein each of the refuse containers (120) includes affixed a communication slave device (110), and each of the plurality of slave devices (110) at a selected location communicates with a master device (100), wherein the process comprises the steps of:
switching on the master device (100) and enabling a GSM device and the wireless communication modules of the master device, and thereafter connecting the master device (100) via Internet with a refuse collection service maintaining a master database;
initialization of the master device (100) and waiting for menu event and establishing a GPRS connection, **characterized by** the steps:
downloading and displaying a download list from the master database on a master device (100) LCD display, wherein the download list includes only the list of MAC addresses of the plurality of slave devices (110) affixed to the refuse containers (120) that are scheduled for emptying, where said refuse containers (120) with affixed slave devices (110) are located in the communication range of the master device (100);
scanning for wireless communicating modules of the plurality of slave devices (110) affixed to the containers (120);
determining if the slave devices (110) are found;
establishing a connection between the master device (100) and the each found of the plurality of the slave devices (110); and
activating of emitting an intermitting LED light (111) of each slave device (110) of a particular colour, the colour visually indicating whether a respective refuse container (120) is scheduled for emptying or not.

10. The process according to claim 9, wherein thereafter establishing the connection, the master device (100) compares MAC addresses from the download list with the MAC addresses of the connected slave devices (110) and determines which MAC addresses of the slave devices (110) are present on the downloaded list.

11. The process according to claims 9 and 10, wherein thereafter the refuse container (120) is being moved in a manner that it is emptied, and 3-axis linear accelerometer provided in the slave device (110) indicates that refuse container (120) has been emptied, the slave device (110) sends a signal of to the master device (100) indicating that the refuse container (120) has been emptied, wherein the MAC address of the said emptied refuse container (120) is removed from the download list.

12. The process according to claim 9, wherein a time interval of intermitting the LED light (111) of the slave device (110) is preferably in the range from 60 to 120 seconds, but another time interval can be set.

13. The process according to claim 9, wherein the master device (100) sends the commands to the plurality of slave devices (110) until all MAC addresses of the slave devices (110) present on the download list are removed from said download list, and thereafter the intermitting LED lights (111) of each slave device (110) are disconnected.

14. A system for managing refuse collection performed by a refuse collection service from refuse containers (120) according to a pre-established schedule for emptying each refuse container (120) including the plurality of communication devices of claim 1.

15. The system according to claim 14, wherein further comprises a communication network provided for the refuse collection service, the refuse collection service managing a master database, wherein the master database includes a customer's data and the pre-established schedule of emptying customers refuse containers (120).

## Patentansprüche

1. Die Mehrzahl von Kommunikationseinrichtungen für die Verwaltung von Müllabfuhr aus Müllbehältern (120) durch einen Müllabfuhrservice nach einem im Voraus festgelegten Zeitplan zum Entleeren eines jeden Müllbehälters (120), die Kommunikationseinrichtungen bestehend aus:
Einer Master-Einrichtung (100), die fähig ist, eine Download-Liste von einem Server zu empfangen, der von dem Müllabfuhrdienst verwaltet wird, sowie dieselbe anzuzeigen;
Einer Vielzahl von Slave-Einrichtungen (110), wobei jede Slave-Einrichtung (110) an einem jeweiligen Müllbehälter angebracht ist (120), wobei
die Master-Einrichtung (100) hat ein drahtloses Kommunikationsmodul zum Aktivieren eines jeden der Mehrzahl von Slave-Einrichtungen (110), die innerhalb des Kommunikationsbereiches der Master-Einrichtung (100) positioniert sind,
daß jede der Slave-Einrichtungen (110) ein helles LED-Signallicht (111), einen 3-Achsen-Linearbeschleunigungsmesser zur Anzeige des Entleerens des Müllbehälters 120), einen Mikrocontroller, ein drahtloses Kommunikationsmodul und eine unabhängige Stromversorgung hat, sowie daß jede der Slave-Einrichtungen (110) eine einmalige MAC-Adresse hat, die seinem jeweiligen Müllbehälter (120) zugeordnet ist;
wobei die Download-Liste nur die MAC-Adressen der Slave-Einrichtungen (110) auf, die an den zum Entleeren bestimmten Müllbehältern (120) angebracht sind, und wenn die Slave-Einrichtungen (110) innerhalb des Kommunikationsbereiches der Master-Einrichtung (100) positioniert sind, aktiviert die Master-Einrichtung (100) ein aussetzendes LED-Licht (111) jeder Slave-Einrichtung (110) in einer bestimmten Farbe, die visuell anzeigt, ob die jeweiligen Müllbehälter (120) dran sind, entleert zu werden oder nicht.

2. Die Einrichtungen nach Anspruch 1, wobei die Master-Einrichtung (100) mit einem GSM/GPRS-Modul ausgestattet ist sowie mit einer GSM-Antenne, einem LCD-Grafikdisplay, einer Tastatur, einem Mikrocontroller, einem drahtlosen Kommunikationsmodul und einer wiederaufladbaren Batterie und Stromsteuerschaltung.

3. Die Einrichtungen nach Anspruch 1, wobei die Download-Liste von einem durch den Müllabfuhr-Dienst verwalteten Server über das Internet unter Verwendung von TCIP Protokoll heruntergeladen wird.

4. Die Einrichtungen nach Anspruch 3, wobei der Server eine Master-Datenbank enthält, welche die Daten jeder MAC-Adresse der an die Abfallbehälter (120) angebrachten Slave-Einrichtungen (110) enthält, sowie den im Voraus festgelegten Zeitplan für die Entleerung eines jeden Müllbehälters (120).

5. Die Einrichtungen nach Anspruch 1, wobei unabhängige Stromversorgung jeder Slave-Vorrichtung (110) eine wiederaufladbare Batterie ist von einer elektrischen Mittel Versorgung oder eine Batterieladeanordnung mit einem Solarpanel.

6. Die Einrichtungen nach Anspruch 1, wobei jede Slave-Einrichtung (110) an die äußere sichtbare Seite des jeweiligen Müllbehälters (120) oder an der Unterseite des Deckels des Müllbehälters (120) angebracht ist.

7. Die Einrichtungen nach Anspruch 1, wobei die Müllbehälter (120) einer beliebigen Art sind, einschließlich Behälter für andere Anwendungen als die Handhabung von Müll.

8. Die Einrichtungen nach Anspruch 1, wobei das drahtlose Kommunikationsmodul der Master-Einrichtung (100) und der Slave-Einrichtungen (110) ein Bluetooth-Modul mit niedrigem Energieverbrauch ist.

9. Ein Verfahren für die Müllabfuhr aus Müllbehältern (120) durch einen Müllabfuhrservice nach einem vorher festgelegten Zeitplan unter Verwendung einer Mehrzahl von Kommunikationseinrichtungen nach Anspruch 1, wobei jeder der Abfallbehälter (120) eine Slave-Einrichtung (110) angebracht enthält und jede der Mehrzahl von Slave-Einrichtungen (110) an einer ausgewählten Stelle steht in Verbindung mit der Master-Einrichtung (100), wobei das Verfahren die folgenden Schritte aufweist:
Einschalten der Master-Einrichtung (100) und Freigabe der GSM-Einrichtung und der drahtlosen Kommunikationsmodule der Master-Einrichtung, und danach die Internet-Verbindung der Master-Einrichtung (100) mit einem Müllabfuhrdienst, der eine Master-Datenbank verwaltet;
Initialisierung der Master-Einrichtung (100) und warten auf das Menü-Event und die Herstellung der GPRS-Verbindung, **gekennzeichnet durch** die folgenden Schritte:
Herunterladen und Anzeigen einer Download-Liste von der Master-Datenbank auf einem LCD Display der Master-Einrichtung (100), wobei die Download-Liste nur die MAC-Adressen der Mehrzahl von Slave-Einrichtungen (110) enthält, die an den zu entleerenden Müllbehältern angebracht sind (120), und die Abfallbehälter (120) mit den angebrachten Slave-Einrichtungen (110) befinden sich in dem Kommunikationsbereich der Master-Einrichtung (100);
Scannen für drahtlose Kommunikationsmodule der Mehrzahl von Slave-Einrichtungen (110), die an die Müllbehälter (120) angebracht sind;
Bestimmen, ob die Slave-Einrichtungen (110) gefunden sind;
Herstellung der Verbindung zwischen der Master-Einrichtung (100) und einer jeden der Mehrzahl von Slave-Einrichtungen (110); und
Aktivieren eines aussetzenden LED-Lichts (111) einer jeden Slave-Einrichtung (110) in einer bestimmten Farbe, die visuell anzeigt, ob der jeweilige Müllbehälter (120) zu entleeren ist oder nicht.

10. Ein Verfahren nach Anspruch 9, wobei danach der Herstellung der Verbindung die Master-Einrichtung (100) MAC-Adressen in der Download-Liste mit den MAC-Adressen der angeschlossenen Slave-Einrichtungen (110) vergleicht und bestimmt, welche MAC-Adressen der Slave-Einrichtungen (110) auf der heruntergeladenen Liste vorhanden sind.

11. Ein Verfahren nach den Ansprüchen 9 und 10, wobei der Müllbehälter (120) in einer Weise bewegt wird, daß er entleert wird, und der 3-Achsen-Beschleunigungsmesser in der Slave-Einrichtung (110) zeigt, daß der Müllbehälter (120) entleert worden ist, also sendet die Slave-Einrichtung (110) ein Signal an die Master-Einrichtung (100), daß der Müllbehälter (120) entleert worden ist, wonach die MAC-Adresse des betreffenden entleerten Müllbehälters (120) von der Download-Liste entfernt wird.

12. Ein Verfahren nach Anspruch 9, wobei der Zeitabstand des aussetzenden LED-Lichts (111) der Slave-Einrichtung (110) vorzugsweise im Bereich von 60 bis 120 Sekunden liegt, es kann jedoch ein anderes Zeitintervall eingestellt werden.

13. Ein Verfahren nach Anspruch 9, wobei die Master-Einrichtung (100) Befehle an die Mehrzahl von Slave-Einrichtungen (110) sendet, bis alle MAC-Adressen der Slave-Einrichtungen (110) auf der Download-Liste von der besagten Liste entfernt und somit auch die aussetzenden LED-Lichter (111) einer jeden Slave-Einrichtung (110) ausgeschaltet sind.

14. Ein System für die Verwaltung von Müllabfuhr aus Müllbehältern (120) durch einen Müllabfuhrservice nach einem vorher festgelegten Zeitplan zum Entleeren eines jeden Müllbehälters (120) inklusive der Mehrzahl von Kommunikationseinrichtungen nach Anspruch 1.

15. Ein System nach Anspruch 14, wobei weiterhin umfasst ein Kommunikationsnetzwerk für den Müllabfuhrservice (120) enthält, sowie den Müllabfuhrservice, der die Master-Datenbank verwaltet, welche Kundendaten und den im Voraus festgelegten Zeitplan zum Entleeren der Müllbehälter enthält (120).

## Revendications

1. Une pluralité de dispositifs de communication pour gérer la collecte de déchets effectuée par un service de collecte de déchets à partir de conteneurs à déchets (120) selon un calendrier préétabli pour vider chaque conteneur de déchets (120), les dispositifs de communication consistant à:
un dispositif maître (100) capable de recevoir une liste de téléchargement d'un serveur maintenu par le service de collecte des ordures et de l'afficher;
une pluralité de dispositifs esclaves (110), chaque dispositif esclave (110) étant attaché à un conteneur d'ordures respectif (120), dans lequel
le dispositif maître (100) comporte un module de communication sans fil pour activer chacun de la pluralité de dispositifs esclaves (110) situés dans la plage de communication du dispositif maître (100),
chacun des dispositifs esclaves (110) est muni d'un voyant de signalisation LED à haute brillance (111), d'un accéléromètre linéaire 3 axes indiquant lequel des conteneurs à déchets (120) doit être vidé, d'un microcontrôleur, d'un module de communication sans fil et d'une source indépendante d'énergie, où chacun des dispositifs esclaves (110) possède sa propre adresse physique MAC, unique et rattachée à chaque conteneur à déchets (120) en particulier;
où la liste téléchargée ne comprend que les adresses MAC des dispositifs esclaves (110) rattachés aux conteneurs à déchets (120) pour qui leur ramassage est d'actualité et où, lorsque lesdits esclaves se trouvent à portée de communication du dispositif maître (100), ledit maître (100) est activé et émet une signalisation lumineuse intermittente produite par la lampe LED (111) se trouvant sur chacun des esclaves (110), la couleur de la signalisation émise étant différente selon que le calendrier préétabli prévoit ou non de vider le conteneur à déchets (120).

2. Les dispositifs selon la revendication 1, **caractérisé en ce que** le dispositif maître (100) est équipé d'un module GSM/GPRS, d'une antenne GSM, d'un affichage LCD graphique, d'un clavier, d'un microcontrôleur, d'un module de communication sans fil, d'une batterie avec recharge et d'un circuit de commande d'alimentation en énergie.

3. Les dispositifs selon la revendication 1, **caractérisé en ce que** la liste des conteneurs à vider est téléchargée par un serveur géré par le service de collecte des déchets selon le Protocole de contrôle de transmission d'Internet (TCP/IP).

4. Les dispositifs selon la revendication 3, **caractérisé en ce que** le serveur contient une base de données maîtresse relative à chacune des adresses physiques MAC des dispositifs esclaves (110) rattachés à chacun des conteneurs à déchets (120) et relative au calendrier de ramassage préétabli pour chacun de ces conteneurs à déchets (120).

5. Les dispositifs selon la revendication 1, **caractérisé en ce que** la source d'énergie indépendante de chaque dispositif esclave (110) est une batterie rechargeable à partir d'une quelconque source d'alimentation électrique ou d'un système de chargement de la batterie tel qu'un panneau solaire par exemple.

6. Les dispositifs selon la revendication 1, **caractérisé en ce que** chacun des esclaves (110) est fixé sur la partie visible extérieure du conteneur à déchets (120) auquel il est rattaché ou sur le dessous du couvercle dudit conteneur à déchets (120).

7. Les dispositifs selon la revendication 1, **caractérisé en ce que** les conteneurs à déchets (120) peuvent être de tous types, y compris des conteneurs utilisés dans des applications autres que le ramassage des ordures.

8. Les dispositifs selon la revendication 1, **caractérisé en ce que** le module de communication sans fil du dispositif maître (100) et des dispositifs esclaves (110) est un module Bluetooth à basse consommation d'énergie.

9. Procédé de gestion du ramassage des ordures se trouvant dans des conteneurs à déchets (120), effectué par un service de collecte des déchets selon un calendrier préétabli et utilisant une pluralité des dispositifs de communication selon la revendication 1, dans lequel chacun des conteneurs à déchets (120) inclus d'un dispositif de communication esclave (110), et chacun de la pluralité de dispositifs esclaves (110), faisant partie de l'ensemble mais localisé à un endroit précis, communique avec le dispositif maître (100), le procédé comprend les étapes suivantes:
mise en marche du dispositif maître (100) permettant l'activation d'un dispositif GSM et des modules de communication sans fil du maître (100) connectant ainsi, via Internet, le dispositif maître (100) au service de collecte des déchets qui gère la base de données maîtresse;
initialisation du dispositif maître (100) et attente du déroulement du menu puis établissement d'une connexion GPRS, **caractérisé en ce qu'**il comprend les étapes suivantes:
télécharger et afficher une liste de téléchargement à partir de la base de données principale sur un dispositif maître (100) à affichage à cristaux liquides, la liste de téléchargement comprenant uniquement la liste d'adresses MAC de la pluralité de dispositifs esclaves (110) fixés aux conteneurs à déchets (120) qui sont: prévu pour la vidange, où lesdits conteneurs à déchets (120) avec des dispositifs esclaves fixés (110) sont situés dans la zone de communication du dispositif maître (100);
balayage de modules de communication sans fil de la pluralité de dispositifs esclaves (110) fixés aux conteneurs (120);
déterminer si les dispositifs esclaves (110) sont trouvés;
établir une connexion entre le dispositif maître (100) et chacun des dispositifs trouvés parmi la pluralité des dispositifs esclaves (110); et
activation de l'émission d'une lumière LED intermittente (111) de chaque dispositif esclave (110) d'une couleur particulière, la couleur indiquant visuellement si un conteneur d'ordures respectif (120) doit être vidé ou non.

10. Procédé selon la revendication 9, dans lequel l'établissement par la suite la connexion, le dispositif maître (100) compare les adresses MAC dans la liste de téléchargement avec les adresses MAC des dispositifs esclaves connectés (110) et détermine les adresses MAC des dispositifs esclaves (110) sont présents sur la liste téléchargée.

11. Procédé selon les revendications 9 et 10, dans lequel le conteneur à déchets (120) est manipulé de sorte à être vidé puis l'accéléromètre linéaire 3 axes se trouvant dans l'esclave (110) indique si le conteneur à déchets (120) a bien été vidé, le dispositif esclave (110) envoyant alors un signal au dispositif maître (100) comme quoi le conteneur à déchets (120) a bien été vidé, où l'adresse physique MAC dudit conteneur à déchets (120) est retirée de la liste téléchargée.

12. Procédé selon la revendication 9, dans lequel un l'intervalle de temps du voyant lumineux LED intermittent (111) du dispositif esclave (110) se situe de préférence entre 60 et 120 secondes mais on peut également programmer un autre intervalle de temps.

13. Procédé selon la revendication 9, dans lequel le dispositif maître (100) envoie les commandes à la pluralité de dispositifs esclaves (110) jusqu'à ce que toutes les adresses MAC des dispositifs esclaves (110) présents dans la liste de téléchargement soient retirées de ladite liste de téléchargement, et ensuite les voyants DEL intermittents (111) de chaque dispositif esclave (110) sont déconnectés.

14. Un système de gestion de la collecte de déchets effectuée par un service de collecte de déchets à partir de conteneurs à déchets (120) selon un calendrier préétabli pour vider chaque conteneur de déchets (120) comprenant la pluralité de dispositifs de communication selon la revendication 1.

15. Le système selon la revendication 14, dans lequel comprend de plus tout un réseau de communication pour le service de collecte des déchets, ce dernier gérant une base de données maîtresse, dans lequel la base de données maîtresse inclut les données de chaque client ainsi que le calendrier préétabli de ramassage des conteneurs à déchets (120) de chacun de ces clients.
